(19)

Europäisches Patentamt

European Patent Office

Office européen des brevets

(11) **EP 4 212 243 A1**

(12) **EUROPEAN PATENT APPLICATION**
published in accordance with Art. 153(4) EPC

(43) Date of publication:
**19.07.2023 Bulletin 2023/29**

(21) Application number: **21867091.7**

(22) Date of filing: **07.09.2021**

(51) International Patent Classification (IPC):
*B01J 23/10* (2006.01)    *B01J 23/46* (2006.01)
*B01J 23/755* (2006.01)    *B01J 23/652* (2006.01)
*B01J 23/745* (2006.01)    *C01B 3/04* (2006.01)
*B01J 23/75* (2006.01)

(52) Cooperative Patent Classification (CPC):
**B01J 23/10; B01J 23/46; B01J 23/652;
B01J 23/745; B01J 23/75; B01J 23/755;
C01B 3/04; Y02E 60/36**

(86) International application number:
**PCT/KR2021/012140**

(87) International publication number:
**WO 2022/055225 (17.03.2022 Gazette 2022/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.09.2020 KR 20200116507
16.07.2021 KR 20210093386**

(71) Applicant: **Korea Research Institute of Chemical
Technology
Daejeon 34114 (KR)**

(72) Inventors:
• **CHAE, Ho Jeong
Daejeon 34114 (KR)**

• **KIM, Youngmin
Daejeon 34114 (KR)**
• **LE, Thien An
Daejeon 34114 (KR)**
• **KIM, Jeong-Rang
Daejeon 34114 (KR)**
• **KIM, Tae Wan
Daejeon 34114 (KR)**
• **LEE, You Jin
Daejeon 34114 (KR)**
• **LEE, Su Un
Daejeon 34114 (KR)**

(74) Representative: **Michalski Hüttermann & Partner
Patentanwälte mbB
Kaistraße 16A
40221 Düsseldorf (DE)**

(54) **AMMONIA DECOMPOSITION CATALYST AND HYDROGEN PRODUCTION METHOD USING SAME**

(57)   A catalyst for an ammonia decomposition reaction and a hydrogen production method using the catalyst are proposed. The shape of cerium oxide used as a catalyst carrier for the catalyst is controlled, and cesium (Cs) is included in the catalyst as a catalyst enhancer. Thus, the catalyst increases an ammonia conversion rate and has improved long-term stability.

Fig. 1

(a)    (b)    (c)    (d)

EP 4 212 243 A1

**Description**

CROSS REFERENCE TO RELATED APPLICATION

The present application claims priority to Korean Patent Application No. 10-2020-0116507, filed September 9, 2020, No. 10-2021-0093386, filed July 16, 2021, the entire contents of which is incorporated herein for all purposes by this reference.

BACKGROUND OF THE INVENTION

1. Field of the Invention

The present invention relates to a catalyst for ammonia decomposition reactions and to a hydrogen production method using the same. More particularly, the present invention relates to a catalyst for ammonia decomposition reactions, the catalyst being capable of improving an ammonia conversion rate in ammonia decomposition reactions and exhibiting long-term stability, and to a hydrogen production method using the same catalyst.

2. Description of the Related Art

In recent years, climate change has intensified, and hydrogen energy, which is one of the environmentally friendly fuels to replace fossil fuels, has gained attraction around the world. For the practical use of hydrogen energy, it is important to develop a technology for safely and efficiently storing and transporting hydrogen. There are several methods of storing hydrogen, but a hydrogen storage material that can reversibly store and release hydrogen is expected to be used as a hydrogen storage medium to be mounted in fuel cell vehicles.

Hydrogen storage materials such as hydrogen storage alloys or liquid hydrogen storage members using organic compounds are disclosed. In addition, as a hydrogen production method, a method of using an ammonia decomposition reaction is disclosed.

In connection with the method, since ammonia has an irritating odor, it is necessary to appropriately process the odor when gas exhibits an odor level that is above a predetermined threshold. Therefore, various ammonia processing methods have previously been reviewed. For example, methods of bringing ammonia into contact with oxygen so that the ammonia can be oxidized to produce water and nitrogen and methods of decomposing ammonia into nitrogen and hydrogen have been proposed.

Patent Document 1 discloses an ammonia processing method using a catalyst to decompose ammonia generated when disposing organic waste into nitrogen and hydrogen. The catalyst is composed of a metal oxide carrier and a catalytic material supported on the carrier. The carrier is made of alumina, silica, titania, or zirconia, and the catalytic material is nickel or a nickel oxide. In addition, at least one of an alkaline earth metal and a lanthanide element is added in the form of a metal or oxide. However, this ammonia processing method is not practical due to the low decomposition rate of ammonia.

In addition, it has recently been examined to use hydrogen recovered from an ammonia decomposition process as a hydrogen source for fuel cells, but in this case, it is required to obtain high-purity hydrogen. To obtain high-purity hydrogen using the ammonia decomposition catalysts that have been proposed so far, a high reaction temperature (for example, higher than 500°C) is required to overcome the high activation barrier (Patent Document 2).

To solve this problem, various catalysts using cerium oxide ($CeO_2$) as catalyst carriers capable of decomposing ammonia at relatively low temperatures at high conversion rates have been developed. In particular, with the use of shape-controlled catalyst carriers, it is possible to control the area-to-volume ratio of the catalyst surface and the type and ratio of the crystal plane exposed, which have a significant impact on the catalytic activity of the catalyst.

However, there are not many studies to use a cerium oxide catalyst carrier for a catalyst to be applied to an ammonia decomposition reaction, and even if there are, the study has not yet reached the commercialization stage of the cerium oxide catalyst carrier.

[Documents of Related Art]

[Patent Document]

(Patent Document 1) Japanese Patent Application Publication No. 2004-195454 (date of publication: July 15, 2004)
Patent Document 2) Korean Patent No. 1781412 (data of issuance: September 25, 2017)

SUMMARY OF THE INVENTION

The present invention has been made to solve the problems occurring in the related art, and objectives of the present invention are to provide an ammonia decomposition reaction catalyst capable of increasing an ammonia conversion rate in an ammonia decomposition reaction, and to provide a hydrogen production method using the same.

In order to accomplish the above objectives, one embodiment of the present invention provides a catalyst for an ammonia decomposition reaction, the catalyst including a catalyst carrier and a catalytic activator supported on the catalyst carrier, in which the catalyst carrier is made from a cerium oxide and has at least one shape selected from the group consisting of a cube shape and spindle shape.

In one preferred embodiment of the present invention, the catalytic activator may be one or more selected from the group consisting of ruthenium, nickel, molybdenum, iron, and cobalt.

In one preferred embodiment of the present invention, the catalyst may include 0.1% to 50% by weight of the catalytic activator material with respect to the total weight of the catalyst.

In one preferred embodiment of the present invention, the catalyst carrier may be a metal oxide composite in which one or more metal oxides selected from among lanthanum (La), yttrium (Y), praseodymium (Pr), neodymium (Nd), samarium (Sm), and gadolinium (Gd) are combined with a cerium oxide.

In one preferred embodiment of the present invention, the molar ratio of cerium to metals other than cerium in the metal oxide complex may be in a range of 40:60 to 95:5.

In one preferred embodiment of the present invention, the cube shape may have a size of 1 $\mu$m or smaller.

In one preferred embodiment of the present invention, the catalyst may include one or more catalyst enhancers selected from the group consisting of cesium and potassium.

In one preferred embodiment of the present invention, the catalyst may include 0.01% to 25% by weight of the catalyst enhancer with respect to the total weight of the catalyst.

Another embodiment of the present invention provides a method of producing hydrogen from ammonia by using the ammonia decomposition reaction catalyst.

In another preferred embodiment of the present invention, the ammonia decomposition reaction may be performed in the range of 300°C to 500°C.

The ammonia decomposition reaction catalyst according to the present invention controls the shape of cerium oxide used as a catalyst carrier for an ammonia decomposition reaction and contains a catalyst enhancer. Thus, the ammonia decomposition reaction catalyst according to the present invention has an improved catalytic activity in an ammonia decomposition reaction, thereby improving the ammonia conversion rate. In addition, the ammonia decomposition reaction catalyst does not exhibit deterioration in catalytic activity even at elevated temperatures and during long-time reactions. That is, the ammonia decomposition reaction catalyst has good long-term stability.

BRIEF DESCRIPTION OF THE DRAWINGS

FIGS. 1A to 1D are TEM images of Catalysts 1 to 5, in which FIG. 1A is a TEM image of Catalyst 1, FIG. 1B is an 20X TEM image of Catalyst 1, FIG. 1C is a TEM image of Catalyst 5, and FIG. 1D is a 2X TEM image of Catalyst 5;
FIGS. 2A to 2D are TEM images of Catalysts 6 and 7, in which FIG. 2A is a TEM image of Catalyst 6, FIG. 2B is a 4X TEM image of Catalyst 6, FIG. 2C is a TEM image of Catalyst 7, and FIG. 2D is a 10X TEM image of Catalyst 7;
FIG. 3 is a graph showing measurement results of ammonia decomposition activity according to the content of catalyst enhancers in various catalysts of the present invention;
FIG. 4 is a graph showing long-term stability measurements of Catalyst 1 and Catalyst 8 of the present invention;
FIG. 5 is a comparative graph showing $H_2$-TPR analysis results for some catalysts of the present invention; and
FIG. 6 is a comparative graph showing $H_2$-TPR analysis results of catalysts according to the content of catalyst enhancers in the catalysts of the present invention.

DESCRIPTION OF THE PREFERRED EMBODIMENTS

Unless otherwise defined, all terms including technical and scientific terms used herein have the same meaning as commonly understood by those who are ordinarily skilled in the art to which this invention belongs. In general, the nomenclature used herein is well-known and commonly used in the art.

The terms "includes", "comprises", or "has", and the like described herein, refer to the presence of the features, figures, steps, operations, components, components, or combinations thereof described herein, and do not exclude the possibility that other features, figures, steps, operations, components, components, or combinations thereof not mentioned may be present or added.

In one aspect, the present invention relates to a catalyst for an ammonia decomposition reaction. The catalyst includes a catalyst carrier and a catalytic activator supported on the catalyst carrier. The catalyst carrier is made from a cerium oxide and has one or more shapes selected from the group consisting of a cube shape and a spindle shape.

At the present time, there are not many studies to apply nanoparticle catalyst carriers to ammonia decomposition reactions, and even if, the studies have not yet reached the commercialization stage. In particular, studies have never been conducted to increase the activity of ammonia dehydrogenation by varying the ratio of a specific crystal plane and a crystal surface area by controlling the shape of the catalyst carrier.

Accordingly, the inventors of the present application have found that in the ammonia dehydrogenation reaction, there is a difference in catalytic activity depending on the shape-controlled catalyst carrier, regardless of the specific surface area of the catalyst carrier, and it is, surprisingly, possible to decompose ammonia with a higher rate than conventional arts by introducing a specific catalytic enhancer into the shape-controlled cerium oxide catalyst carrier. The inventors have made the present invention on the basis of the findings.

In general, lattice oxygen is present in metal oxides. The lattice oxygen is highly reactive depending on their type and shape and can affect the electrical conductivity of the catalyst due to the migration of oxygen or electrons within the lattice.

In particular, cerium is a rare earth metal that exhibits high electrical conductivity. In the case of cerium oxides controlled to have a cube shape and/or a spindle shape, such cerium oxides may limit the aggregation of catalytic activator particles due to catalytic activator-catalyst carrier interactions in high temperature ammonia dehydrogenation reactions and may provide sufficient electron density to the active catalytic material. Therefore, the cerium oxide having a particle shape that is controlled to be a cube and/or spindle shape can change the electron density of the active region of the active catalytic material, thereby improving catalyst activity and improving thermal stability and durability of the catalyst.

To manufacture a catalyst carrier having a controlled shape, any method can be used without limitation if the method can provide a catalyst carrier having a cube shape and/or a spindle shape. Examples of the method include a hydrothermal synthesis method, a precipitation method, a polyol method, a metal ion reduction method, and an electrochemical deposition method.

The size of the cube-shaped particles may be in a range of 1 um or less, preferably in a range of 5 nm to 100 nm, more preferably in a range of 10 nm to 30 nm, and most preferably in a range of 12 nm to 18 nm. When the size of the cube-shaped particles is larger than 1 um, the effect of enhancing the catalytic activity is not significant.

The catalyst carrier according to the present invention may be made from a metal oxide composite that is a composite of cerium oxide and one or more metal oxides of one or more metals selected from among lanthanum (La), yttrium (Y), praseodymium (Pr), neodymium (Nd), samarium (Sm), and gadolinium (Gd). The metal oxide composite may have a cube shape and/or a spindle shape.

The metal oxide composite may contain 40% to 95% by mole of cerium, and preferably 50% to 90% by mole of cerium.

To manufacture a catalyst carrier having a controlled shape, any method can be used without limitation if the method can provide a catalyst carrier having a cube shape and/or a spindle shape. Examples of the method include a hydrothermal synthesis method, a precipitation method, a polyol method, a metal ion reduction method, and an electrochemical deposition method.

The active catalytic material supported on the catalyst carrier may be one or more metals selected from the group consisting of ruthenium, nickel, molybdenum, iron, and cobalt. Preferably, the active catalytic material may be ruthenium.

The degrees that D-bands of metals commonly used as active catalytic materials are filled with electrons have relations with the adsorption energy levels of nitrogen and metals, and also have relations with the efficiency of ammonia dehydrogenation. Specifically, the more the D-band is filled with electrons, the lower the adsorption energy level of the active catalytic material and nitrogen. On the contrary, the less the D-band is filled with electrons, the lower the adsorption energy level of the active catalytic material and nitrogen. When ruthenium is used as an active catalytic material, the nitrogen adsorption energy is low but is not optimal. Accordingly, according to the present invention, it is possible to change the electron density in the D-band of ruthenium and the optimal nitrogen binding energy level by using a predetermined metal oxide and cerium oxide having a controlled shape as a catalyst carrier, thereby increasing the ammonia dehydrogenation activity.

The active catalytic material may be contained in an amount of 0.1% to 50% by weight with respect to the total weight of the catalyst. When the active catalytic material is contained in an amount of less than 0.1% by weight, it is difficult to expect performance improvement. When the active catalytic material is contained in an amount of more than 50% by weight, agglomeration occurs between the active catalytic material particles, resulting in deterioration in the catalyst performance.

In addition, the ammonia decomposition reaction catalyst according to the present invention may include one or more catalyst enhancers selected from the group consisting of cesium and potassium. The catalyst enhancer is expected to provide electrons to the active catalytic material such as ruthenium (Ru) in an ammonia decomposition reaction, thereby increasing the electron density. Therefore, in the dissociation and adsorption of nitrogen, which is a crucial step in the ammonia decomposition reaction, nitrogen molecules can easily separate, resulting in improvement in the efficiency of the ammonia decomposition reaction.

The content of the catalyst enhancer may be determined depending on the content of the active catalytic material. Preferably, the catalyst enhancer may be contained in an amount in a range of 0.01% to 25% by weight, relative to the total weight of the catalyst, and more preferably in a range of 0.5% to 10% by weight. When the content of the catalyst enhancer is less than 0.01% by weight, it may be difficult to expect an effect of enhancing the catalytic activity. When the content is greater than 25% by weight, the increase in catalytic activity is not significant in view of the increase in the content of the catalyst enhancer.

Any catalyst preparation method can be used without limitation if the method can support an active catalytic material on a catalyst carrier, or an active catalytic material and a catalyst enhancer on a catalyst carrier by reacting and heat-treating the catalyst carrier and an active catalytic material precursor, or the catalyst carrier, the active catalytic material precursor, and a catalyst enhancer. Examples of the method include a deposition-precipitation (DP) method, a dry impregnation method, a wet impregnation method, a sol-gel method, a hydrothermal synthesis method, and a polyol method.

The active catalytic material precursor may be one or more compounds selected from the group consisting of inorganic compounds and organic compounds including active catalytic material ions. Specifically, the active catalytic material precursor may be chloride, hydrate, nitride, acetylacetonate, iodide, or the like.

In addition, the precursor of the catalyst enhancer may be one or more compounds selected from the group comprising inorganic compounds and organic compounds including catalyst enhancer ions. Specifically, the catalyst enhancer precursor may be a hydroxide, chloride, nitride, carbonate, fluoride, acetate, or the like of cesium or potassium.

The catalyst for ammonia decomposition reactions described above is improved in catalytic activity, thermal stability, and durability, thereby improving the ammonia conversion rate in ammonia decomposition reactions and exhibiting long-term stability even at high temperatures and for long periods of time.

In another aspect, the present invention relates to a hydrogen production method using the ammonia decomposition catalyst. The method produces hydrogen from ammonia.

The hydrogen production method according to the present invention can process gas containing ammonia with the use of the ammonia decomposition catalyst which uses a cube-shaped and/or spindle-shaped cerium oxide as a catalyst carrier, and dehydrogenate the ammonia into nitrogen and hydrogen, thereby producing hydrogen.

The ammonia decomposition catalyst exhibits an ammonia conversion rate of 80% or more at a temperature in the range of 400°C to 500°C, and more particularly exhibits an ammonia conversion rate of 96% or more at a temperature in the range of 450°C to 500°C.

The present invention will be described in more detail with reference to examples described below. The examples described below are presented only to help understanding of the present invention, and the scope of the present invention is not limited thereto.

### <Carrier 1: Cube-shaped Ceria Catalyst Carrier>

A solution prepared from 12.0 g of NaOH (97%, Daejung) and 40 ml of deionized water was added dropwise to a solution obtained by dissolving 1.3 g of $Ce(NO_3)_3 \cdot 6H_2O$ (Sigma, 99%) in 30 ml of distilled water. The solution was then mixed in a 100 ml Teflon bottle and stirred continuously for 30 minutes. Finally, the Teflon bottle was put into a stainless steel container autoclave, sealed, and heated at 160°C for 24 hours. The resulting precipitate was then collected, washed several times with deionized water and ethanol, dried in an oven at 80°C for 24 hours, and then fired at 500°C for 4 hours to obtain a cube-shaped $CeO_2$ catalyst carrier having a particle size of 15 nm.

### <Carrier 2: Cube-shaped Ceria Catalyst Carrier>

A solution prepared from 12 g of NaOH (97%, Daejung) and 40 ml of deionized water was added dropwise to a solution obtained by dissolving 0.65 g of $Ce(NO_3)_3 \cdot 6H_2O$ (Sigma, 99%) in 30 ml of distilled water. The solution was then mixed in a 100 ml Teflon bottle and stirred continuously for 30 minutes. Finally, the Teflon bottle was put into and in a stainless steel container autoclave, sealed, and heated at 160°C for 24 hours. The resulting precipitate was then collected, washed several times with deionized water and ethanol, dried in an oven at 80°C for 24 hours, and then fired at 500°C for 4 hours to obtain a cube-shaped $CeO_2$ catalyst carrier having a particle size of 10 nm.

### <Carrier 3: Cube-shaped Ceria Catalyst Carrier>

A solution prepared from 12 g of NaOH (97%, Daejung) and 40 ml of deionized water was added dropwise to a solution obtained by dissolving 2.6 g of $Ce(NO_3)_3 \cdot 6H_2O$ (99%, Sigma) in 30 ml of distilled water. The solution was then mixed in a 100 ml Teflon bottle and stirred continuously for 30 minutes. Finally, the Teflon bottle was put into a stainless steel container autoclave, sealed, and heated at 160°C for 24 hours. The resulting precipitate was then collected, washed several times with deionized water and ethanol, dried in an oven at 80°C for 24 hours, and then fired at 500°C for 4 hours to obtain a cube-shaped $CeO_2$ catalyst carrier having a particle size of 20 nm.

**<Carrier 4: Spindle-shaped Ceria Catalyst Carrier>**

To 70 ml of deionized water was dissolved 2.6 g of $Ce(NO_3)_3 \cdot 6H_2O$ (99%, Sigma) and 1 g of urea (99%, Samchun) . The mixture was transferred to a 100 ml Teflon-lined autoclave, then heated to 120°C, and maintained at this temperature for 8 hours. The resulting precipitate was then collected, washed several times with deionized water and ethanol, and then dried in a vacuum oven at 80 °C for 12 hours. The dried matter was then calcined in air at 400°C for 3 hours to obtain a spindle-shaped $CeO_2$ catalyst carrier.

**<Carrier 5: Cube-shaped Ceria Catalyst Carrier and Cube-Shaped Lanthanum Oxide Composite Catalyst Carrier>**

A solution obtained by adding 19.2 g of NaOH (97%, Daejung) to 50 ml of deionized water was added dropwise to a solution obtained by dissolving 1.73 g of $Ce(NO_3)_3 \cdot 6H_2O$ (99%, Sigma) and 0.87 g of $La(NO_3)_3 \cdot 6H_2O$ (99%, Sigma) in 30 ml of distilled water. The solutions were then mixed in a 100 ml Teflon bottle and stirred continuously for 30 minutes. Finally, the Teflon bottle was put into in a stainless steel container autoclave, sealed, and heated at 180°C for 12 hours. The resulting precipitate was then collected, washed several times with deionized water and ethanol, and dried in an oven at 80°C for 24 hours to produce $La_{0.33}Ce_{0.67}O_2$-cube, which is a composite oxide having a cube shape and a La-to-Ce molar ratio of 0.33:0.67.

**<Carrier 6: Sphere-shaped Ceria Catalyst Carrier>**

To 3 ml of deionized water, 2.6 g of $Ce(NO_3)_3 \cdot 6H_2O$ (99.8%, Sigma) was added dropwise 3 ml of acetic acid (99.7%, Junsei) and ethylene glycol (99.8%, Sigma). The solution was then mixed in a 100 ml Teflon bottle and stirred continuously for 30 minutes. Finally, the Teflon bottle was put into a stainless steel container autoclave, sealed, and heated at 180°C for 3.5 hours. The resulting precipitate was then collected, washed several times with deionized water and ethanol, dried in an oven at 80°C for 12 hours, and then fired at 500°C for 4 hours to obtain a sphere-shaped $CeO_2$ catalyst carrier.

**<Carrier 7: Rod-shaped Ceria Catalyst Carrier>**

28.7 g of NaOH (97%, Daejung) and 2.6 g of $Ce(NO_3)_3 \cdot 6H_2O$ (99%, Sigma) ($OH^-/Ce^{3+}$ = 120 in molar ratio) were dissolved in 50 ml and 30 ml of deionized water, respectively. The two solutions were then mixed in a 100 ml Teflon bottle and continuously stirred for 30 minutes. Finally, the Teflon bottle was put into a stainless steel container autoclave, sealed, and heated at 100°C for 24 hours. The resulting precipitate was then collected, washed several times with deionized water and ethanol, dried in an oven at 60°C for 24 hours, and then fired at 500°C for 4 hours to obtain a rod-shaped $CeO_2$ catalyst carrier.

**<Carrier 8: Polycrystalline Ceria Catalyst Carrier>**

To a solution obtained by dissolving 7.57 g $Ce(NO_3)_3 \cdot 6H_2O$ (99%, Sigma) in 100 ml of deionized water was added dropwise to 1.0 M $NH_4OH$ at a rate of 60 ml/h until the pH of the solution reached about 9. The solution was then stirred for 24 hours. The resulting precipitate was then collected, washed several times with deionized water and ethanol, dried in a vacuum oven at 110°C for 12 hours, and then fired at 500°C for 4 hours to obtain a polycrystalline $CeO_2$ catalyst carrier.

**<Catalyst 1>**

A ruthenium-based catalyst was prepared by using the catalyst carrier of Carrier 1. First, 1.0 g of the catalyst carrier of Carrier 1 was suspended in 50 ml of deionized water, and then 0.04 g of $RuCl_3 \cdot xH_2O$ (99.98%, Sigma) was added to the suspension. The suspension was adjusted with a solution of $NH_4OH$ 0.5 M until the pH of the suspension became 9.0. The $NH_4OH$ 0.5 M solution was prepared by diluting 16.3 ml of $NH_4OH$ (28% to 30%, Samchun) with deionized water to make 0.5 L of final solution. The adjusted suspension was aged under stirring at 400 rpm at room temperature for 12 hours. The resulting precipitate was then filtered off, washed several times with deionized water and ethanol, and then dried at 110°C for 12 hours to prepare an ammonia decomposition reaction catalyst in which 2% by weight of ruthenium was supported. The catalyst prepared was designated Ru/CeO$_2$-cube(15).

**<Catalyst 2>**

An ammonia decomposition reaction catalyst was prepared in the same manner as catalyst 1 except that the catalyst carrier for Catalyst 1 was replaced with Carrier 2. In the example, 2% by weight of ruthenium was contained. The catalyst prepared was designated Ru/CeO$_2$-cube(10).

**<Catalyst 3>**

An ammonia decomposition reaction catalyst was prepared in the same manner as catalyst 1 except that the catalyst carrier for Catalyst 1 was replaced with Carrier 3. In the example, 2% by weight of ruthenium was contained. The catalyst prepared was designated Ru/CeO$_2$-cube(20).

**<Catalyst 4>**

An ammonia decomposition reaction catalyst was prepared in the same manner as catalyst 1 except that the catalyst carrier for Catalyst 1 was replaced with Carrier 5. In the example, 2% by weight of ruthenium was contained. The catalyst prepared was designated Ru/La$_{0.33}$Ce$_{0.67}$O$_2$-cube.

**<Catalyst 5>**

An ammonia decomposition reaction catalyst was prepared in the same manner as catalyst 1 except that the catalyst carrier for Catalyst 1 was replaced with Carrier 4. In the example, 2% by weight of ruthenium was contained. The catalyst prepared was designated Ru/CeO$_2$-spindle.

**<Catalyst 6>**

An ammonia decomposition reaction catalyst was prepared in the same manner as catalyst 1 except that the catalyst carrier for Catalyst 1 was replaced with Carrier 6. In the example, 2% by weight of ruthenium was contained. The catalyst prepared was designated Ru/CeO$_2$-sphere.

**<Catalyst 7>**

An ammonia decomposition reaction catalyst was prepared in the same manner as catalyst 1 except that the catalyst carrier for Catalyst 1 was replaced with Carrier 7. In the catalyst of this example, 2% by weight of ruthenium was contained. The catalyst prepared was designated Ru/CeO$_2$-rod.

**<Catalyst 8>**

An ammonia decomposition reaction catalyst was prepared in the same manner as catalyst 1 except that the catalyst carrier for Catalyst 1 was replaced with Carrier 8. In the example, 2% by weight of ruthenium was contained. The catalyst prepared was designated Ru/CeO$_2$-polycrystalline.

**<Catalyst 9>**

An ammonia decomposition reaction catalyst was prepared in the same manner as Catalyst 1 except that the catalyst carrier for Catalyst 1 was replaced with Al$_2$O$_3$ (gamma phase, Sigma). In this catalyst, 2% by weight of ruthenium was contained. The catalyst prepared was designated Ru/Al$_2$O$_3$.

**<Catalyst 10>**

An ammonia decomposition reaction catalyst was prepared in the same manner as Catalyst 1 except that the catalyst carrier for Catalyst 1 was replaced with MgO (Sigma). In the catalyst of this example, 2% by weight of ruthenium was contained. The catalyst prepared was designated Ru/MgO.

**<Catalyst 11>**

A ruthenium-based catalyst was prepared through a wet-impregnation (WI) method using Carrier 1. First, 1.0 g of the catalyst carrier of Carrier 1 was suspended in 30 ml of deionized water and stirred for 30 minutes. Next, 1.25 ml of Ru(NO) $(NO_3)_x(OH)_y$ (x + y = 3, Ru 1.5%, Sigma) and 4.95 ml of 0.04 M CsNOs were added to the suspension at the same time, and the solution was stirred for another 30 minutes. The stirred solution was aged with a rotary evaporator at a temperature of 60°C, a pressure of 72 mbar, and a rotation speed of 150 rpm for 4 hours. The resulting precipitate was then dried at 110°C for 12 hours to prepare an ammonia decomposition reaction catalyst in which ruthenium was supported in an amount of 2% by weight and cesium was supported in an amount of 2.6% by weight. The catalyst prepared was designated $Cs_1Ru_1/CeO_2$-Cube.

**<Catalyst 12>**

A catalyst was prepared in the same manner as Catalyst 11 except that 4.95 ml of $KnO_3$ was used instead of 4.95 ml of 0.04 M $CsNO_3$ as a catalyst enhancer precursor. In this ammonia decomposition reaction catalyst (K:Ru molar ratio = 1.0), 2% by weight of ruthenium and 0.8% by weight of potassium were supported. The catalyst prepared was designated $K_1Ru_1/CeO_2$-Cube.

**<Catalyst 13>**

A catalyst was prepared in the same manner as Catalyst 11 except that 4.95 ml of $Ba(NO_3)_2$ was used instead of 4.95 ml of 0.04 M CsNOs as a catalyst enhancer precursor. In this ammonia decomposition reaction catalyst (Ba:Ru molar ratio = 1.0), 2% by weight of ruthenium and 2.6% by weight of barium were supported. The catalyst prepared was designated $Ba_1Ru_1/CeO_2$-Cube.

**<Catalyst 14>**

A catalyst was prepared in the same manner as Catalyst 11 except that 4.95 ml of NaNOs was used instead of 4.95 ml of 0.04 M CsNOs as a catalyst enhancer precursor. In this ammonia decomposition reaction catalyst (Na:Ru molar ratio = 1.0), 2% by weight of ruthenium and 0.4% by weight of sodium were supported. The catalyst prepared was designated $Na_1Ru_1/CeO_2$-Cube.

**<Catalyst 15>**

A catalyst was prepared in the same manner as Catalyst 11 except that 4.95 ml of $Ca(NO_3)_2$ was used instead of 4.95 ml of 0.04 M $CsNO_3$ as a catalyst enhancer precursor. In this ammonia decomposition reaction catalyst (Ca:Ru molar ratio = 1.0), 2% by weight of ruthenium and 0.8% by weight of calcium were supported. The catalyst prepared was designated $Ca_1Ru_1/CeO_2$-Cube.

**<Catalyst 16>**

A catalyst was prepared in the same manner as Catalyst 11 except that Carrier 4 was used instead of Carrier 1. In this ammonia decomposition reaction catalyst, 2% by weight of ruthenium and 2.6% by weight of cesium were supported. The catalyst prepared was designated $Cs_1Ru_1/CeO_2$-spindle.

**<Catalyst 17>**

A catalyst was prepared in the same manner as Catalyst 11 except for Carrier 8 being used. In the ammonia decomposition reaction catalyst, 2% by weight of ruthenium and 0.8% by weight of calcium were supported. The catalyst prepared was designated $Ca_1Ru_1/CeO_2$-polycrystalline.

**<Catalyst 18>**

A catalyst was prepared in the same manner as Catalyst 11 except for Carrier 6 being used. In the ammonia decomposition reaction catalyst, 2% by weight of ruthenium and 0.8% by weight of calcium were supported. The catalyst prepared was designated $Ca_1Ru_1/CeO_2$-sphere.

**<Catalyst 19>**

A catalyst was prepared in the same manner as Catalyst 11 except for Carrier 7 being used. In the ammonia decomposition reaction catalyst, 2% by weight of ruthenium and 0.8% by weight of calcium were supported. The catalyst prepared was designated $Ca_1Ru_1/CeO_2$-rod.

**<Catalyst 20>**

A catalyst was prepared in the same manner as Catalyst 11 except that 0.47 ml of 0.04 M CsNOs was used instead of 4.95 ml of 0.04 M CsNOs. In the ammonia decomposition reaction catalyst, 2% by weight of ruthenium and 1.3% by weight of cesium were supported. The catalyst prepared was designated $Cs_{0.5}Ru_1/CeO_2$-cube.

**<Catalyst 21>**

A catalyst was prepared in the same manner as Catalyst 11 except that 9.9 ml of 0.04 M CsNOs was used instead of 4.95 ml of 0.04 M $CsNO_3$. In the ammonia decomposition reaction catalyst, 2% by weight of ruthenium and 5.2% by weight of cesium were supported. The catalyst prepared was designated $Cs_2Ru_1/CeO_2$-cube.

**<Experimental Example 1: Measurement of Shape and Physical Properties of Catalyst Carrier>**

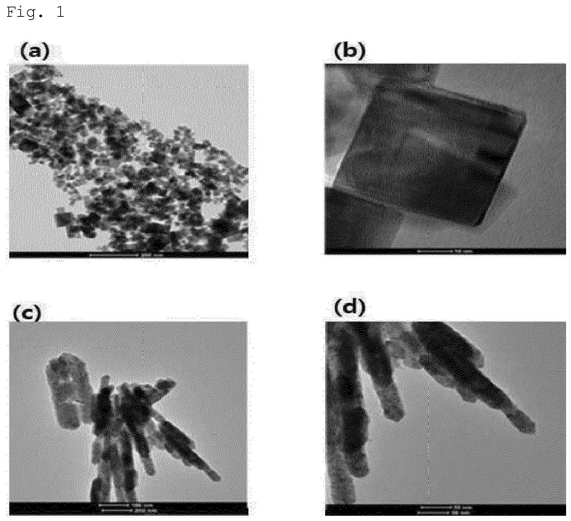

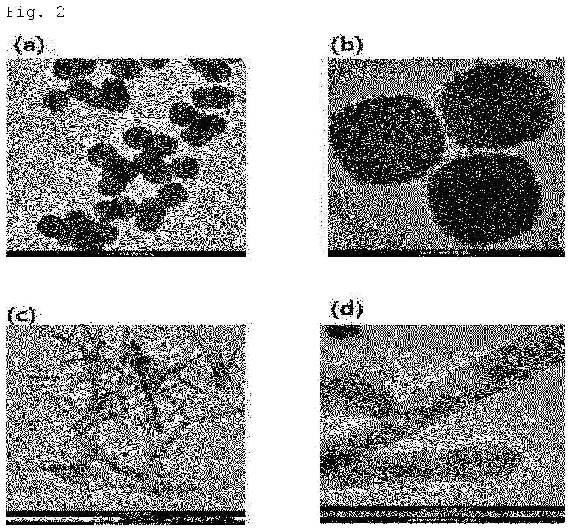

The shape and physical properties of Catalysts 1, 4, and 5 and Catalysts 6, 7, and 8 were measured with a TEM measuring device (Titan G2 60-300S, FEI Company, USA), a BET measuring device (TriStar II 3020, Micromeritics Company, USA), and a CO pulse chemisorption measuring device (ASAP 2020, Micromeritics Company, USA). The results are shown in FIGS. 1A to 1D, FIGS. 2A to 2D, and Table 1.

In the BET specific surface area analysis of catalyst carriers, degassing was performed at 300°C for 5 hours, nitrogen physical adsorption was performed at -196°C, and the specific surface area was obtained using the BET model.

The dispersibility of Ru, which is an active material, was used with the CO pulse chemisorption technique. First, heat treatment was performed at 100°C in a pure oxygen atmosphere for 30 minutes, and then purging was performed. Next, a reduction reaction was performed at 500°C in a hydrogen atmosphere for 2 hours, and gas adsorption was performed at 35°C in order of helium (30 minutes) - oxygen (30 minutes) - helium (30 minutes) - carbon dioxide (30 minutes) - helium (30 minutes) - hydrogen (30 minutes) - helium (30 minutes). Finally, the amount of CO adsorption was obtained by injecting CO so that CO/Ru = 1.

[Table 1]

| Classificati on | Catalyst type | Specific surface area of catalyst carrier: $S_{bet}(m^2/g)$ | Ru Dispersion (%) |
|---|---|---|---|
| <Catalyst 1> | $Ru/CeO_2$-cube(15) | 23 | 25.6 |
| <Catalyst 4> | $Ru/La_{0.33}Ce_{0.67}O_2$-cube | 19 | 16.3 |
| <Catalyst 5> | $Ru/CeO_2$-spindle | 104 | 9.8 |
| <Catalyst 6> | $Ru/CeO_2$-sphere | 162 | 85.5 |
| <Catalyst 7> | $Ru/CeO_2$-rod | 65 | 16.9 |
| <Catalyst 8> | $Ru/CeO_2$-polycrystalline | 65 | 38.4 |

As illustrated in FIGS. 1A to 1D and FIGS. 2A to 2D, the catalyst carriers of the present invention were prepared to have specific shapes by controlling the shape of the particles according to the method of the present invention.

In addition, as shown in Table 1, the catalyst carriers differ in specific surface area and dispersibility of ruthenium according to the shapes of the catalyst carriers.

**<Experimental Example 2: Measurement of Results of Ammonia Decomposition Reactions>**

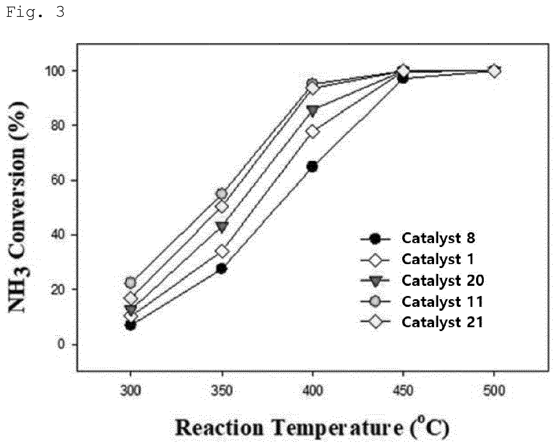

Ammonia dehydrogenation decomposition reactions were performed using the catalysts prepared as described above to determine ammonia conversion rates. The ammonia decomposition ability was measured under at a spatial velocity of 6,000 $ml/g_{cat.}$/h at atmospheric pressure at reaction temperatures of 300°C, 350°C, 400°C, 450°C, and 500°C, and the ammonia conversion rate was calculated using Equation 1 shown below. The results are shown in Table 2 and FIG. 3.

[Equation 1]

Ammonia Conversion Rate (%) = [(Ammonia Concentration at Reactor Inlet) - (Ammonia Concentration at Reactor Outlet)/(Ammonia Concentration at Reactor Inlet) + ((Ammonia Concentration at Reactor Outlet)] × 100

**Change in Catalytic Activity Depending on Type and Shape of Carrier and Particle Size of Carrier**

Table 2 below shows the results of ammonia conversion rate analysis by performing ammonia dehydrogenation decomposition reactions using Catalysts 1 to 10.

[Table 2]

| Classificati on | Catalyst type | Ammonia conversion rate according to ammonia decomposition temperature | | | | |
|---|---|---|---|---|---|---|
| | | 300°C | 350°C | 400°C | 450°C | 500°C |
| <Catalyst 1> | Ru/CeO$_2$-cube(15) | 10.2 | 34.0 | 77.9 | 99.8 | 100 |
| <Catalyst 2> | Ru/CeO$_2$-cube(10) | 9.2 | 29.6 | 66.4 | 96.4 | 100 |
| <Catalyst 3> | Ru/CeO$_2$-cube(20) | 10.2 | 32.4 | 71.8 | 98.7 | 100 |
| <Catalyst 4> | Ru/La$_{0.33}$Ce$_{0.67}$O$_2$-cube | 13.8 | 47.7 | 87.4 | 100 | 100 |
| <Catalyst 5> | Ru/CeO$_2$-spindle | 6.5 | 26.5 | 68.5 | 99.2 | 100 |
| <Catalyst 6> | Ru/CeO$_2$-sphere | 5.1 | 23.6 | 60.8 | 97.0 | 100 |
| <Catalyst 7> | Ru/CeO$_2$-rod | 3.5 | 17.2 | 52.5 | 96.5 | 100 |
| <Catalyst 8> | Ru/CeO$_2$-polycrystalline | 5.5 | 24.2 | 61.8 | 96.3 | 100 |
| <Catalyst 9> | Ru/Al$_2$O$_3$ | 7.0 | 23.1 | 53.6 | 84.6 | 99.4 |
| <Catalyst 10> | Ru/MgO | 7.6 | 23.6 | 54.1 | 88.1 | 99.8 |

As shown in Table 2, the ammonia decomposition reaction catalysts of the present invention exhibited a relatively high ammonia conversion as compared to the catalysts of the comparative examples.

When Catalyst 1 is compared with Catalysts 9 and 10, although the same amount of ruthenium is supported on the catalyst carrier in each of the catalysts, the case where the catalyst carrier contains cerium oxide exhibits a higher ammonia conversion rate than the case where the catalyst carrier contains alumina or magnesia. That is, the results of Table 2 show that cerium oxide is better as the catalyst carrier for supporting ruthenium (Ru), which is an active catalytic material for an ammonia decomposition reaction. In addition, when the composite of Ce and La was used as the catalyst carrier as in Catalyst 4, the ammonia decomposition activity significantly increased. From this result, it is seen that when cerium (Ce) forms a composite with another metal, the ammonia decomposition activity can be increased compared to the case where cerium (Ce) is used alone.

When Catalysts 1 and 5 were compared with Catalyst 8, although the catalyst carriers were made of the same material, i.e., cerium (Ce), the ammonia conversion rates differed depending on the shapes of the catalyst carriers. When the ammonia decomposition temperature was 400°C, the ammonia conversion rates of the cerium oxide carriers were higher in this order: Ru/CeO$_2$-cube > Ru/CeO$_2$ -spindle > Ru/CeO$_2$-polycrystalline > Ru/CeO$_2$-sphere > Ru/CeO$_2$-rod. Therefore, it is seen that the shape of the cerium oxide carrier greatly influences the ammonia decomposition activity.

On the other hand, when Catalyst 1 was compared with Catalyst 3, the ammonia decomposition activity changed depending on the particle size of the cerium oxide. When the cerium oxide had a cube shape, the catalytic activity was highest at a particle size of about 15 nm, was second highest at a particle size of 20 nm and was next highest at a particle size of 10 nm.

**Change in Catalytic Activity Depending on Type and Content of Catalyst Enhancer**

Table 3 below shows the results of catalytic activity analysis in which different catalyst enhancers were used in ammonia decomposition reactions.

[Table 3]

| Classificati on | Catalyst type | Ammonia conversion rate according to ammonia decomposition temperature | | | | |
|---|---|---|---|---|---|---|
| | | 300°C | 350°C | 400°C | 450°C | 500°C |
| <Catalyst 1> | $Ru/CeO_2$-cube(15) | 10.2 | 34.0 | 77.9 | 99.8 | 100 |
| <Catalyst 11> | $Cs_1Ru_1/CeO_2$-cube | 22.3 | 54.9 | 95.2 | 100 | 100 |
| <Catalyst 12> | $K_1Ru_1/CeO_2$-cube | 12.7 | 40.9 | 84.5 | 100 | 100 |
| <Catalyst 13> | $Ba_1Ru_1/CeO_2$-cube | 6.4 | 25.2 | 64.6 | 97.7 | 100 |
| <Catalyst 14> | $Na_1Ru_1/CeO_2$-cube | 5.2 | 23.4 | 62.5 | 98.3 | 100 |
| <Catalyst 15> | $Ca_1Ru_1/CeO_2$-cube | 4.4 | 20.8 | 57.1 | 95.3 | 100 |

When Ru, Ba, Na, or Ca was introduced into a Ru-based ammonia decomposition catalyst, the catalytic activity decreased. However, when Cs or K was introduced, the catalytic activity for ammonia decomposition increased compared to the case where Ru was used alone. When Cs was introduced, the activity dramatically increased. That is, Cs and the like can be used as catalyst enhancers to significantly enhance the activity of ammonia decomposition catalysts. In addition, the activity increase effect according to the content of the catalyst enhancer is shown in FIG. 3. The ammonia conversion rate varied with the change in content of the catalyst enhancer (Catalysts 11, 20, and 21) . Catalyst 11 in which the molar ratio of Cs to Ru was 1.0 exhibited a significant increase in ammonia conversion rate compared to Catalyst 20 in which the molar ratio of Cs to Ru was 0.5 over the entire temperature range. Catalyst 21 in which the molar ratio of Cs to Ru was 2.0, which was higher than that of Catalyst 20, exhibited a decrease in ammonia conversion rate. On the basis of the experiment results, it was confirmed that the most optimal performance was achieved when the molar ratio of the catalyst enhancer to Ru was 1.0.

**Change in Activity according to Shape of Carrier in Catalyst Containing Catalyst Enhancer**

Table 4 below shows the influence of the shape of the cerium oxide carrier in Ru catalysts containing Cs as enhancers.

[Table 4]

| Classificati on | Catalyst type | Ammonia conversion rate according to ammonia decomposition temperature | | | | |
|---|---|---|---|---|---|---|
| | | 300°C | 350°C | 400°C | 450°C | 500°C |
| <Catalyst 1> | $Ru/CeO_2$-cube(15) | 10.2 | 34.0 | 77.9 | 99.8 | 100 |
| <Catalyst 11> | $Cs_1Ru_1/CeO_2$-Cube | 22.3 | 54.9 | 95.2 | 100 | 100 |
| <Catalyst 16> | $Cs_1Ru_1/CeO_2$-spindle | 14.0 | 45.7 | 91.0 | 100 | 100 |
| <Catalyst 17> | $Cs_1Ru1/CeO_2$-polycrystalline | 13.6 | 40.8 | 85.9 | 100 | 100 |

(continued)

| Classification | Catalyst type | Ammonia conversion rate according to ammonia decomposition temperature | | | | |
|---|---|---|---|---|---|---|
| | | 300°C | 350°C | 400°C | 450°C | 500°C |
| <Catalyst 18> | $Cs_1Ru_1/CeO_2$-sphere | 11.7 | 40.0 | 84.8 | 100 | 100 |
| <Catalyst 19> | $Cs_1Ru_1/CeO_2$-rod | 9.8 | 37.2 | 80.1 | 99.5 | 100 |

In Table 4, there is a difference in the activity of the ammonia decomposition catalyst according to the shape of the carrier in the Ru catalyst in which Cs is included as an enhancer. When the reaction temperature is 400°C, the activity is in this order: $Ru/CeO_2$-cube > $Ru/CeO_2$-spindle > $Ru/CeO_2$-polycrystalline > $Ru/CeO_2$-sphere > $Ru/CeO_2$-rod. That is, the order of the activity levels of the catalysts is the same as in Table 2 showing the activity levels for the case where the enhancers are not used. Therefore, it is assumed that the effect of the enhancers is not influenced by the shape of the catalyst carrier.

<Experimental Example 3: Measurement of Long-Term Stability of Catalyst >

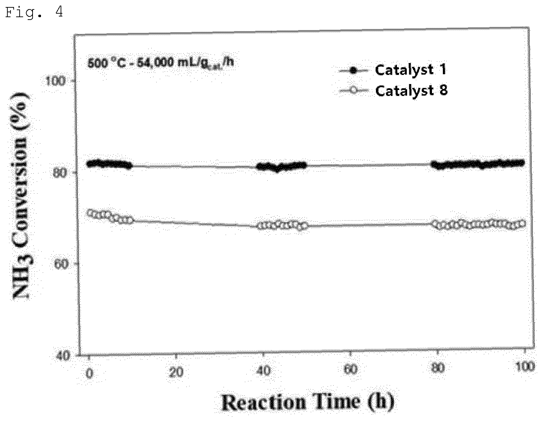

Ammonia dehydrogenation reactions were performed for 100 hours using Catalyst 1 and Catalyst 8 to evaluate the long-term stability of the catalysts. The measurements were carried out at atmospheric pressure at an ammonia space velocity of 54,000 $ml/g_{cat.}/h$ at a reaction temperature of 500°C for 100 hours. The results are shown as ammonia conversion rates in FIG. 4.
As shown in FIG. 4, it was confirmed that Catalyst 1 exhibited a stable catalytic activity for more than 100 hours of reaction with a higher conversion rate than Catalyst 8.

<Experimental Example 4: H2-TPR Analysis of Catalyst>

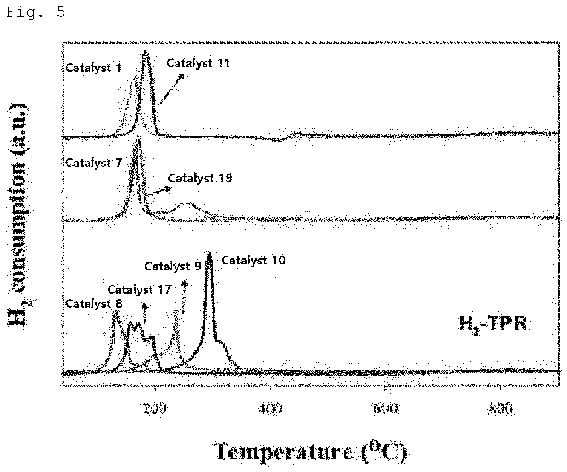

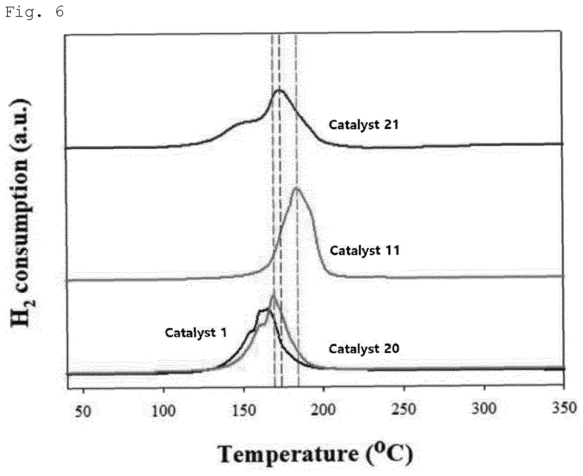

$H_2$-TPR analysis was performed on Catalyst 1, Catalyst 7, Catalyst 8, Catalyst 9, Catalyst 10, Catalyst 11, Catalyst 17, and Catalyst 19. The $H_2$-TPR analysis was performed in a manner that 0.05 g of each catalyst was heated to 110°C in an inert gas atmosphere, then the temperature of the catalyst was lowered to 35°C, and then the temperature of the catalyst was raised to 1,000°C at a rate of 10°C/min, with 10% $H_2$/Ar gas being supplied. The results of the $H_2$-TPR analysis are shown in FIGS. 5 and 6.
As illustrated in FIG. 5, when Cs was added as an enhancer, the Ru reduction peak moved toward an increased temperature, and the area of the Ru reduction peak increased. From this result, it is seen that the addition of Cs enhances the interaction between Ru and the carrier ($CeO_2$) and increases the relative content of the Ru active species.
In addition, as illustrated in FIG. 6, when the molar ratio of Cs to Ru is 1.0, the temperature at which the reducing peak of Ru occurs is shifted to the highest temperature as compared to the case where the molar ratio of Cs to Ru is 0.5 or 2.0. From this result, it is seen that enhanced interaction between Ru and the carrier and a relatively high content of Ru active species are key factors to increase the ammonia conversion rate.
Therefore, the ammonia decomposition reaction catalyst of the present invention has a good catalytic activity in ammonia decomposition reactions, thereby improving the ammonia conversion rate. In addition, the ammonia decomposition reaction catalyst of the present invention exhibits little deterioration in activity at elevated temperatures and for long periods of time, indicating that the catalyst has a good long-term stability.
Although the present invention has been described with reference to the embodiments, other embodiments may be configured within the spirit and scope of the present invention. Accordingly, the scope of the present invention is defined only by the appended claims and their equivalents and is not limited by the specific embodiments described herein.

Claims

1.    A catalyst for an ammonia decomposition reaction, the catalyst comprising a catalyst carrier and an active catalytic material supported on the catalyst carrier, wherein
the catalyst carrier is made of a cerium oxide having one or more shapes selected from the group consisting of a cube shape and a spindle shape.

2. The catalyst of claim 1, wherein the active catalytic material is one or more metals selected from the group consisting of ruthenium, nickel, molybdenum, iron, and cobalt.

3. The catalyst of claim 1, wherein the active catalytic material is contained in an amount of 0.1% by weight to 50% by weight relative to the total weight of the catalyst.

4. The catalyst of claim 1, wherein the catalyst carrier is a metal oxide composite of cerium oxide and one or more metal oxides of one or more metals selected from lanthanum o(La), yttrium (Y), praseodymium (Pr), neodymium (Nd), samarium (Sm), and gadolinium (Gd).

5. The catalyst of claim 4, wherein the molar ratio of cerium to the other metal in the metal oxide composite is in a range of 40:60 to 95:5.

6. The catalyst of claim 1, wherein the cube-shaped catalyst carrier has a size of 1 $\mu$m or smaller.

7. The catalyst of claim 1, further comprising one or more catalyst enhancers selected from the group consisting of cesium and potassium.

8. The catalyst of claim 7, wherein the one or more catalyst enhancers are contained in an amount of 0.01% by weight to 25% by weight relative to the total weight of the catalyst.

9. A method of producing hydrogen from ammonia by using the catalyst of any one of claims 1 to 8.

10. The method of claim 9, wherein an ammonia decomposition reaction is carried out in a range of 300°C to 500°C.

Fig. 1

Fig. 2

(a)

(b)

(c)

(d)

Fig. 3

Fig. 4

Fig. 5

Fig. 6

## INTERNATIONAL SEARCH REPORT

| International application No. |
| --- |
| **PCT/KR2021/012140** |

| A. | CLASSIFICATION OF SUBJECT MATTER |
| --- | --- |

**B01J 23/10**(2006.01)i; **B01J 23/46**(2006.01)i; **B01J 23/755**(2006.01)i; **B01J 23/652**(2006.01)i; **B01J 23/745**(2006.01)i; **C01B 3/04**(2006.01)i; **B01J 23/75**(2006.01)i

According to International Patent Classification (IPC) or to both national classification and IPC

| B. | FIELDS SEARCHED |
| --- | --- |

Minimum documentation searched (classification system followed by classification symbols)

B01J 23/10(2006.01); B01J 23/46(2006.01); B01J 23/58(2006.01); B01J 23/63(2006.01); B01J 23/83(2006.01); B01J 37/02(2006.01); C01B 3/04(2006.01); C01B 3/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 암모니아 분해(ammonia decomposition), 촉매(catalyst), 담지체(carrier), 큐브 (cube), 스핀들(spindle), 세륨 산화물(cerium oxide; CeO2), 촉매 증진제(catalyst promoter)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X<br>Y | HUANG, Chuanqing et al. Hydrogen generation by ammonia decomposition over Co/CeO2 catalyst: Influence of support morphologies. Applied Surface Science. 28 July 2020(online publication date), vol. 5 32, no. 1, p. 147335(1-9).<br>    See abstract; pages 2-4; Scheme 1.; Fig.1; and table 3. | 1-3,6,9,10<br>4,5,7,8 |
| Y | KR 10-2019-0006336 A (KOREA INSTITUTE OF SCIENCE AND TECHNOLOGY) 18 January 2019 (2019-01-18)<br>    See claims 1-4 and 8-10; paragraphs [0024]-[0034], [0054]-[0062] and [0090]; and table 1. | 4,5 |
| Y | US 2020-0062590 A1 (UNIVERSITY OF SOUTH CAROLINA) 27 February 2020 (2020-02-27)<br>    See claims 1-6; and paragraphs [0036]-[0037]. | 7,8 |
| A | KR 10-2020-0076404 A (KOREA INSTITUTE OF SCIENCE AND TECHNOLOGY) 29 June 2020 (2020-06-29)<br>    See claims 1-6 and 12; and paragraphs [0048] and [0070]. | 1-10 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 December 2021** | **21 December 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

International application No.

**PCT/KR2021/012140**

### C.    DOCUMENTS CONSIDERED TO BE RELEVANT

| Category* | Citation of document, with indication, where appropriate, of the relevant passages | Relevant to claim No. |
|---|---|---|
| A | WANG, Fei et al. Catalytic behavior of supported Ru nanoparticles on the {100}, {110}, and {111} facet of CeO2. Journal of Catalysis. 05 June 2015(online publication date), vol. 329, pp. 177-186.<br>See entire document. | 1-10 |
| A | KR 10-2012-0058035 A (INDUSTRY-ACADEMIC COOPERATION FOUNDATION, YONSEI UNIVERSITY) 07 June 2012 (2012-06-07)<br>See entire document. | 1-10 |

Form PCT/ISA/210 (second sheet) (July 2019)

INTERNATIONAL SEARCH REPORT
Information on patent family members

International application No.

**PCT/KR2021/012140**

| Patent document cited in search report | | | Publication date (day/month/year) | Patent family member(s) | | | Publication date (day/month/year) |
|---|---|---|---|---|---|---|---|
| KR | 10-2019-0006336 | A | 18 January 2019 | KR | 10-1985174 | B1 | 04 June 2019 |
| US | 2020-0062590 | A1 | 27 February 2020 | None | | | |
| KR | 10-2020-0076404 | A | 29 June 2020 | KR | 10-2241516 | B1 | 19 April 2021 |
| KR | 10-2012-0058035 | A | 07 June 2012 | KR | 10-1167098 | B1 | 20 July 2012 |

Form PCT/ISA/210 (patent family annex) (July 2019)

**EP 4 212 243 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200116507
- KR 1020210093386
- JP 2004195454 A
- KR 1781412